# FASCICULE DE BREVET EUROPEEN

(11) **EP 1 590 903 B1**
(45) Date de publication et mention de la délivrance du brevet: **26.09.2007**
(21) Numéro de dépôt: 04706208.8
(22) Date de dépôt: 29.01.2004
(51) Int. Cl.: H04B 10/18

(54) **DISPOSITIF ET PROCEDE DE TRANSMISSION OPTIQUE A TRES HAUT DEBIT, UTILISATION DE CE DISPOSITIF ET DE CE PROCEDE**
EINRICHTUNG UND VERFAHREN ZUR HOCHRATIGEN OPTISCHEN ÜBERTRAGUNG UND VERWENDUNG DER EINRICHTUNG DES VERFAHRENS
DEVICE AND METHOD FOR HIGH RATE OPTICAL TRANSMISSION AND USE OF SAID DEVICE AND METHOD

(30) Priorité: 07.02.2003 FR 0301444
(43) Date de publication de la demande: 02.11.2005
(73) Titulaire: FRANCE TELECOM, 75015 Paris (FR)
(72) Inventeur: PINCEMIN, Erwan, F-22290 Gommenec'h (FR)
(74) Mandataire: Remy, Vincent Noel Paul
(86) Numéro de dépôt international: PCT/FR2004/000205
(87) Numéro de publication internationale: WO 2004/079952

(56) Documents cités:
- EP-A- 0 504 834
- US-A- 4 918 751
- US-A- 5 737 460
- US-B1- 6 418 256

## Description

La présente invention concerne un dispositif de transmission d'un signal à travers un réseau optique de transmission de données. L'invention concerne également un procédé de transmission correspondant ainsi qu'une utilisation de ce dispositif et de ce procédé.

Plus précisément, l'invention concerne un dispositif de transmission à travers un réseau optique de transmission de données, du type comportant un émetteur d'impulsions et au moins une fibre de ligne pour la transmission d'au moins une impulsion dans cette fibre de ligne.

Un tel dispositif de transmission est connu et est utilisé pour des transmissions à très haut débit, tel que par exemple 40 Gbit/s ou davantage. Depuis peu, on souhaite utiliser ce type de dispositif pour des transmissions dont le débit atteint ou est supérieur à 160 Gbit/s.

A de tels débits, des distorsions non linéaires du signal peuvent apparaître. Ces distorsions augmentent de façon importante les erreurs de transmission. En particulier, les effets non linéaires intra-canal connus de type SPM (pour "Self Phase Modulation", c'est-à-dire auto-modulation de phase), ICXPM (pour "Intra Channel Cross Phase Modulation", c'est-à-dire modulation de phase croisée intra-canal), ICFWM (pour "Intra Channel Four Wave Mixing", c'est-à-dire mélange à quatre ondes intra-canal), ICSRS (pour "Intra Channel Stimulated Raman Scattering", c'est-à-dire diffusion Raman stimulée intra-canal), ou auto-raidissement, ont des conséquences très lourdes sur la qualité de transmission.

Une solution pour réduire l'accumulation de distorsions non linéaires consiste à remplacer une fibre de ligne située entre deux dispositifs d'amplification par une succession de portions de fibres optiques comportant alternativement une dispersion chromatique positive et négative, avec une courte périodicité. Cette solution est compliquée et n'est pas très pratique d'utilisation. En effet, alterner différentes types de fibres dans un câble est techniquement complexe. De plus, cela présente l'inconvénient de rendre plus difficile une intervention en cas de rupture de câble entre deux dispositifs d'amplification, puisqu'il n'est alors pas aisé de savoir quel type de fibre est à remplacer.

On connait également du document US- 5 737 460 un dispositif de transmission conforme au préambule de la revendication 1.

L'invention a pour but de remédier à ces inconvénients en fournissant un dispositif de transmission capable de transmettre un signal sans distorsion non linéaire, à moindre coût, même à très haut débit.

L'invention a donc pour objet un dispositif conforme à la revendication 1.

En effet, les distorsions non linéaires d'un signal dans la fibre de ligne apparaissent pour des puissances instantanées du signal dépassant un certain seuil.

Ainsi, le dispositif de transmission selon l'invention impose la propagation de l'impulsion à travers un milieu dispersif et linéaire avant de transmettre l'impulsion dans la fibre de ligne, de sorte que la puissance de crête de l'impulsion soit suffisamment réduite, pour être située en dessous dudit seuil lorsque l'impulsion entre dans la fibre de ligne, garantissant qu'ensuite toute distorsion du signal sera linéaire dans la fibre de ligne.

Un dispositif de transmission selon l'invention peut en outre comporter l'une ou plusieurs des caractéristiques suivantes :
- le module d'élargissement comprend une fibre de type HOM, SLA, ou à cristaux photoniques ;
- le dispositif comporte une pluralité de modules d'amplification, disposés régulièrement le long de la fibre de ligne, comportant chacun un module de compensation de dispersion comprenant un milieu de propagation dispersif et linéaire ; et
- le module de compensation de dispersion comprend une fibre de type HOM, SLA, ou à cristaux photoniques.

L'invention a également pour objet l'utilisation d'un dispositif de transmission tel que décrit précédemment pour un réseau optique à débit au moins égal à 160 Gbit/s.

L'Invention a également pour objet un procédé de transmission d'un signal à travers un réseau optique de transmission de données comportant les étapes consistant à émettre au moins une impulsion et à transmettre cette impulsion à travers un réseau optique de transmission de données comportant au moins une fibre de ligne, caractérisé en ce qu'il comporte en outre, avant de transmettre l'impulsion dans la fibre de ligne, une étape consistant à transmettre l'impulsion dans un milieu de propagation dispersif et linéaire dont la dispersion chromatique cumulée est suffisamment élevée pour réduire la puissance de crête de l'impulsion en deçà d'un seuil prédéterminé, seuil au-dessus duquel un signal est susceptible de subir des distorsions non linéaires dans la fibre de ligne.

Un procédé de transmission selon l'invention peut en outre comporter la caractéristique selon laquelle, l'impulsion transmise étant amplifiée par des modules d'amplification disposés régulièrement le long de la fibre de ligne, on transmet l'impulsion, dans ces modules d'amplification, dans un milieu de propagation dispersif et linéaire pour compenser la dispersion subie par l'impulsion dans la fibre de ligne.

Enfin, l'invention a pour objet l'utilisation d'un procédé tel que décrit précédemment pour une transmission optique à débit au moins égal à 160Gbit/s.

L'invention sera mieux comprise à l'aide de la description qui va suivre, donnée uniquement à titre d'exemple et faite en se référant aux dessins annexés dans lesquels :
- la figure 1 représente un dispositif de transmission optique selon l'invention ;
- la figure 2 représente l'allure d'une impulsion se propageant dans le dispositif de transmission optique de la figure 1 ;et
- la figure 3 est un diagramme qui représente l'évolution de la largeur temporelle d'une impulsion se propageant dans le dispositif optique de la figure 1.

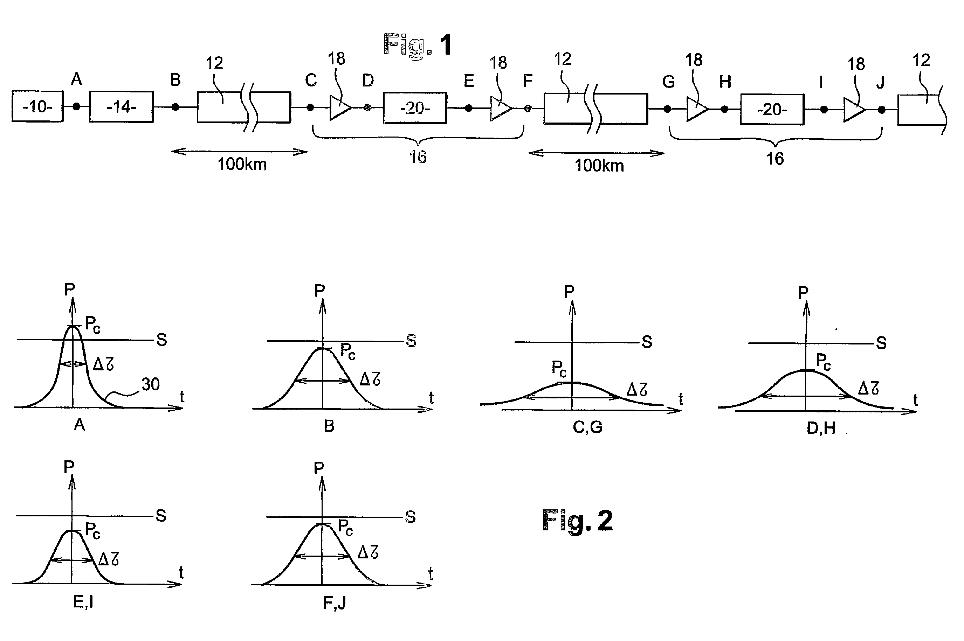

Le dispositif représenté sur la figure 1 comporte un émetteur d'impulsions 10 adapté pour l'émission de signaux à très haut débit dans une fibre optique de ligne 12.

La fibre de ligne 12 est par exemple une fibre de type SSMF (pour "Standard Single Mode Fiber", c'est-à-dire fibre mono-mode standard), conforme à la norme UIT G.652.

Pour la modulation du signal à l'intérieur du dispositif de transmission, on utilise, de façon classique un multiplexage temporel optique de type OTDM (pour "Optical Time Division Multiplexing") ou un multiplexage en longueur d'onde de type WDM (pour "Wavelength Division Multiplexing").

Le dispositif comporte en outre un module 14 d'élargissement linéaire d'impulsions comportant un milieu de propagation dispersif et linéaire, caractérisé par un coefficient de dispersion chromatique prédéterminé.

Dans ce type de milieu, même à très haut débit, les effets non linéaires sont considérablement réduits. En fait, ils n'apparaissent que pour des puissances de signaux très nettement supérieures à celles à partir desquelles ces mêmes effets sont susceptibles d'apparaître dans la fibre de ligne 12.

Le module d'élargissement 14 peut par exemple comporter une fibre optique de type HOM (pour "Higher Order Mode", c'est-à-dire mode d'ordre supérieur), de type SLA (pour "Super Large effective Area", c'est-à-dire à très large surface effective) ou une fibre à cristaux photoniques.

Par exemple, pour une transmission à 160 Gbit/s d'impulsions 10 dont la largeur temporelle à mi-hauteur est de 2 ps, on choisit, pour le module d'élargissement 14, une fibre optique de dispersion cumulée de 5,4 ps/nm pour un facteur d'élargissement de 2, de 8,9 ps/nm pour un facteur d'élargissement de 3, de 12,2 ps/nm pour un facteur d'élargissement de 4, de 15,4 ps/nm pour un facteur d'élargissement de 5, ou encore de 31,2 ps/nm pour un facteur d'élargissement de 10, selon le résultat souhaité. Ces calculs sont connus de l'homme du métier et ne seront pas détaillés davantage.

Le module 14 d'élargissement linéaire d'impulsions est disposé entre l'émetteur d'impulsions 10 et la fibre de ligne 12.

De façon régulière, par exemple tous les 100 km, la fibre de ligne est interrompue et un module d'amplification 16 est inséré dans cette fibre de ligne 12. Ce module d'amplification 16 comporte de façon classique, en entrée et en sortie, deux amplificateurs 18 entre lesquels est inséré un module 20 de compensation de dispersion du même type que le module d'élargissement 14.

Comme le module d'élargissement 14, le module 20 de compensation de dispersion comprend un milieu de propagation dispersif et linéaire. Il peut donc aussi comporter une fibre optique de type HOM, de type SLA ou à cristaux photoniques.

Le fait qu'un signal subisse un élargissement temporel ou au contraire une concentration temporelle dans un milieu dispersif dépend des propriétés du signal en entrée de ce milieu et des propriétés du milieu précédemment traversé, notamment du signe de son coefficient de dispersion. Le choix des paramètres de chaque milieu de propagation, que ce soit dans la fibre de ligne 12, dans le module 14 d'élargissement linéaire d'impulsion, ou dans le module 20 de compensation de dispersion, ayant pour effet l'élargissement ou la concentration temporelle du signal transmis, est connu de l'homme du métier et ne sera donc pas détaillé dans la suite.

L'allure générale d'une impulsion 30 émise par l'émetteur 10 est représentée sur la figure 2, à différents endroits du dispositif de transmission.

En A, c'est-à-dire à la sortie de l'émetteur 10, l'impulsion 30 a une puissance de crête P_{c} supérieure à un seuil S prédéterminé. Ce seuil S correspond à une puissance de signal au-delà de laquelle ce signal est susceptible de subir des distorsions non linéaires lorsqu'il se propage à travers la fibre de ligne 12. On notera également qu'en sortie de l'émetteur 10, l'impulsion 30 a une largeur temporelle à mi-hauteur Δτ faible.

Pour éviter les distorsions non linéaires, l'impulsion 30 se propage tout d'abord dans le module d'élargissement linéaire d'impulsions 14 en sortie duquel, au point B, la puissance de crête P_{c} a diminué pour se retrouver en dessous du seuil S. En contrepartie, l'impulsion 30 est temporellement élargie, c'est-à-dire que la valeur de Δτ a augmenté entre A et B.

La puissance de l'impulsion étant alors toujours inférieure à S, celle-ci peut se propager dans la fibre de ligne 12 sans subir de distorsion non linéaire.

Ensuite, en C, l'impulsion 30 s'étant atténuée lors de sa propagation dans la fibre de ligne 12, sa puissance de crête P_{c} atteint, par exemple au bout de 100 km, une valeur nécessitant une amplification du signal.

Dans le module d'amplification 16, l'impulsion 30 traverse tout d'abord le premier amplificateur 18, ce qui a pour effet d'augmenter sa puissance de crête P_{c}. Par contre, la largeur de l'impulsion Δτ n'est pas modifiée.

Puis, l'impulsion se propage dans le module de compensation de dispersion 20, pour atteindre en sortie de ce module, c'est-à-dire au point E, une valeur de puissance de crête encore supérieure mais inférieure au seuil S, avec une largeur Δτ ramenée à sa valeur en B.

Ensuite, l'impulsion 30 travers le deuxième amplificateur 18, de sorte qu'en F elle reprend la même forme qu'en B.

Ensuite, aux points G, H, I, J, l'impulsion 30 a de nouveau la même forme qu'aux points C, D, E et F.

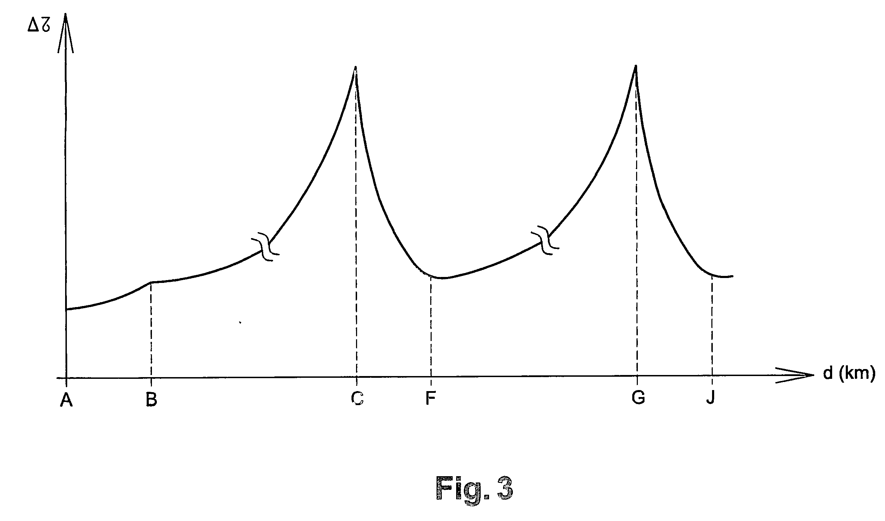

Le diagramme de la figure 3 représente l'évolution de la largeur temporelle de l'impulsion 30 au cours de sa propagation dans le dispositif de transmission optique.

Entre A et B, dans le module 14 d'élargissement linéaire d'impulsions, l'impulsion est élargie, pour que sa puissance de crête soit inférieure au seuil S. Ensuite, entre B et C, dans la fibre de ligne 12, l'impulsion continue à s'élargir progressivement et subit également une atténuation.

Entre C et F, l'impulsion est d'une part amplifiée par les deux amplificateurs 18 et d'autre part redressée par le module 20 de compensation de dispersion, ce qui a pour effet de redonner à la largeur temporelle Δτ, la valeur qu'elle avait en B.

Ensuite, entre F et G, l'impulsion subit les mêmes transformations (élargissement et atténuation) qu'entre B et C dans la fibre de ligne 12. Enfin, entre G et J, le signal subit le même redressement qu'entre C et F.

Le dispositif de transmission optique comportant des modules d'amplification 16 disposés régulièrement par exemple tous les 100 km, le signal représentant l'évolution de la largeur temporelle d'impulsions le long de ce dispositif est un signal périodique de périodes (B,F).

Il apparaît clairement qu'un dispositif de transmission selon l'invention et le procédé de transmission correspondant, permettent la transmission, sans distorsion non linéaire d'impulsions, même à très haut débit, et notamment à des débits pouvant atteindre ou dépasser 160 Gbit/s.

De façon plus générale, même à des débits inférieurs, c'est-à-dire par exemple dès 40 Gbit/s, ce dispositif est particulièrement bien adapté pour la transmission optique.

## Revendications

1. Dispositif de transmission d'un signal à travers un réseau optique de transmission de données, comportant un émetteur d'impulsions (10) et au moins une fibre de ligne (12) pour la transmission d'au moins une impulsion (30) dans cette fibre de ligne, le dispositif comportant un module (14) d'élargissement d'impulsions comportant un milieu de propagation dispersif dont la dispersion chromatique cumulée est suffisamment élevée pour réduire la puissance de crête (P_{c}) de l'impulsion en deçà d'un seuil (S) prédéterminé, seuil au-dessus duquel un signal est susceptible de subir des distorsions non linéaires dans la fibre de ligne, ce module d'élargissement (14) étant disposé entre l'émetteur (10) et la fibre de ligne (12), **caractérisé en ce que** le milieu de propagation du module d'élargissement d'impulsions est linéaire.

2. Dispositif de transmission selon la revendication 1, **caractérisé en ce que** le module d'élargissement (14) comprend une fibre de type HOM, SLA, ou à cristaux photoniques.

3. Dispositif de transmission selon la revendication 1 ou 2, **caractérisé en ce qu'**il comporte une pluralité de modules d'amplification (16), disposés régulièrement le long de la fibre de ligne (12), comportant chacun un module (20) de compensation de dispersion comprenant un milieu de propagation dispersif et linéaire.

4. Dispositif de transmission selon la revendication 3, **caractérisé en ce que** le module (20) de compensation de dispersion comprend une fibre de type HOM, SLA, ou à cristaux photoniques.

5. Dispositif selon l'une quelconque des revendications 1 à 4, apte à être utilisé dans un réseau optique à débit au moins égal à 160 Gbit/s.

6. Procédé de transmission d'un signal à travers un réseau optique de transmission de données comportant les étapes consistant à émettre au moins une impulsion (30) et à transmettre cette impulsion à travers un réseau optique de transmission de données comportant au moins une fibre de ligne (12), le procédé comportant en outre, avant de transmettre l'impulsion dans la fibre de ligne, une étape consistant à transmettre l'impulsion dans un milieu (14) de propagation dispersif dont la dispersion chromatique cumulée est suffisamment élevée pour réduire la puissance (P_{c}) de crête de l'impulsion en deçà d'un seuil (S) prédéterminé, seuil au-dessus duquel un signal est susceptible de subir des distorsions non linéaires dans la fibre de ligne, **caractérisé en ce que** le milieu de propagation du module d'élargissement d'impulsions est linéaire.

7. Procédé de transmission selon la revendication 6, **caractérisé en ce que**, l'impulsion transmise étant amplifiée par des modules d'amplification (16) disposés régulièrement le long de la fibre de ligne, on transmet l'impulsion, dans ces modules d'amplification, dans un milieu de propagation dispersif et linéaire pour compenser la dispersion subie par l'impulsion dans la fibre de ligne.

8. Procédé selon la revendication 6 ou 7, dans lequel le débit de transmission du réseau optique est au moins égal à 160 Gbit/s.

## Claims

1. Device for transmitting a signal through an optical data network, comprising a pulse sender (10) and at least one line fibre (12) for the transmission of at least one pulse (30) in this line fibre, the device comprising a pulse broadening module (14) comprising a dispersive propagation medium, the aggregate chromatic dispersion of which is high enough to reduce the peak power (P_{c}) of the pulse below a predetermined threshold (S), a threshold above which a signal is likely to become subject to nonlinear distortions in the line fibre, this broadening module (14) being positioned between the sender (10) and the line fibre (12), **characterized in that** the propagation medium of the pulse-broadening module is linear.

2. Transmission device according to Claim 1, **characterized in that** the broadening module (14) comprises a fibre of HOM, SLA or photonic crystal type.

3. Transmission device according to Claim 1 or 2, **characterized in that** it comprises a plurality of amplification modules (16), positioned at regular intervals along the line fibre (12), each comprising a dispersion compensation module (20) comprising a dispersive and linear propagation medium.

4. Transmission device according to Claim 3, **characterized in that** the dispersion compensation module (20) comprises a fibre of HOM, SLA or photonic crystal type.

5. Device according to any one of Claims 1 to 4, suitable for use in an optical network with bit rates at least equal to 160 Gbit/s.

6. Method of transmitting a signal through an optical data network comprising steps consisting in sending at least one pulse (30) and in transmitting this pulse through an optical data network comprising at least one line fibre (12), the method also comprising, before transmitting the pulse in the line fibre, a step consisting in transmitting the pulse in a dispersive propagation medium (14), the aggregate chromatic dispersion of which is high enough to reduce the peak power (P_{c}) of the pulse below a predetermined threshold (S), a threshold above which a signal is likely to become subject to nonlinear distortions in the line fibre, **characterized in that** the propagation medium of the pulse-broadening module is linear.

7. Transmission method according to Claim 6, **characterized in that**, the transmitted pulse being amplified by amplification modules (16) positioned at regular intervals along the line fibre, the pulse is transmitted, in these amplification modules, into a dispersive and linear propagation medium to compensate the dispersion to which the pulse is subject in the line fibre.

8. Method according to Claim 6 or 7, in which the transmission bit rate of the optical network is at least equal to 160 Gbit/s.

## Patentansprüche

1. Vorrichtung zur Übertragung eines Signals über ein optisches Netz zur Übertragung von Daten, aufweisend einen Impulsgeber (10) und mindestens eine Linienfaser (12) für die Übertragung mindestens eines Impulses (30) in dieser Linienfaser, wobei die Vorrichtung ein Modul (14) zur Impulserweiterung aufweist, das ein dispergierendes Übertragungsmedium aufweist, dessen kumulierte chromatische Streuung ausreichend hoch ist, um die Spitzenleistung (P_{c}) des Impulses unter einen vorgegebenen Schwellenwert (S) zu senken, oberhalb dessen ein Signal nicht lineare Verzerrungen in der Linienfaser erleiden kann, wobei dieses Erweiterungsmodul (14) zwischen dem Sender (10) und der Linienfaser (12) angeordnet ist, **dadurch gekennzeichnet, dass** das Übertragungsmedium des Moduls zur Impulserweiterung linear ist.

2. Übertragungsvorrichtung nach Anspruch 1, **dadurch gekennzeichnet, dass** das Erweiterungsmodul (14) eine Faser vom Typ HOM, SLA oder mit Photonenkristallen aufweist.

3. Übertragungsvorrichtung nach Anspruch 1 oder 2, **dadurch gekennzeichnet, dass** sie mehrere Verstärkungsmodule (16) aufweist, die gleichmäßig entlang der Linienfaser (12) angeordnet sind, wobei jedes ein Dispersionskompensationsmodul (20) enthält, das ein dispergierendes, lineares Übertragungsmedium aufweist.

4. Übertragungsvorrichtung nach Anspruch 3, **dadurch gekennzeichnet, dass** das Dispersionskompensationsmodul (20) eine Faser vom Typ HOM, SLA oder mit Photonenkristallen aufweist.

5. Vorrichtung nach einem der Ansprüche 1 bis 4, die für die Verwendung in einem optischen Netz mit einer Leistung von mindestens 160 Gbit/s geeignet ist.

6. Verfahren zur Übertragung eines Signals über ein optisches Netz zur Übertragung von Daten, aufweisend die Schritte der Abgabe mindestens eines Impulses (30) und der Übertragung dieses Impulses über ein optisches Netz zur Übertragung von Daten, aufweisend mindestens eine Linienfaser (12), wobei dieses Verfahren des Weiteren vor der Übertragung des Impulses in der Linienfaser einen Schritt aufweist, der darin besteht, den Impuls in einem dispergierenden Übertragungsmedium (14) zu übertragen, dessen kumulierte chromatische Streuung ausreichend hoch ist, um die Spitzenleistung (P_{c}) des Impulses unter einen vorgegebenen Schwellenwert (S) zu senken, oberhalb dessen ein Signal nicht lineare Verzerrungen in der Linienfaser erleiden kann, **dadurch gekennzeichnet, dass** das Übertragungsmedium des Moduls zur Impulserweiterung linear ist.

7. Verfahren zur Übertragung nach Anspruch 6, **dadurch gekennzeichnet, dass** der übertragene Impuls durch Verstärkungsmodule (16), die gleichmäßig entlang der Linienfaser angeordnet sind, verstärkt wird; in diesen Verstärkungsmodulen wird der Impuls in einem dispergierenden, linearen Übertragungsmedium übertragen, um die durch den Impuls in der Linienfaser erlittene Dispersion auszugleichen.

8. Verfahren nach Anspruch 6 oder 7, bei dem die Übertragungsleistung des optischen Netzes mindestens 160 Gbit/s beträgt.
